# EUROPÄISCHE PATENTSCHRIFT

(11) **EP 0 526 718 B1**
(45) Veröffentlichungstag und Bekanntmachung des Hinweises auf die Patenterteilung: **02.05.1997**
(21) Anmeldenummer: 92110348.7
(22) Anmeldetag: 19.06.1992
(51) Int. Cl.: B22D 41/60, B22D 41/54

(54) **Verfahren zum induktiven Aufheizen von keramischen Formteilen**
Method for induction heating of ceramic parts
Procédé de chauffage par induction de pièces céramiques

(30) Priorität: 05.08.1991 DE 4125916
(43) Veröffentlichungstag der Anmeldung: 10.02.1993
(73) Patentinhaber: DIDIER-WERKE AG, 65189 Wiesbaden (DE)
(72) Erfinder: Brückner, Raimund, W-6272 Engenhahn (DE); Hintzen, Ullrich, W-6204 Taunusstein-Watzhahn (DE); Lührsen, Ernst, W-6208 Bad Schwalbach (DE); Rothfuss, Hans, W-6204 Taunusstein (DE); Ott, Albert, W-6273 Waldems-Wüstems (DE)
(74) Vertreter: Brückner, Raimund, Dipl.-Ing.

(56) Entgegenhaltungen:
- WO-A-82/03349
- FR-A- 872 089
- FR-A- 2 609 914
- PATENT ABSTRACTS OF JAPAN & JP-A-62 282 904 (SHINAGAWA FIRE BRICK) 8 Dezember 1987
- PATENT ABSTRACTS OF JAPAN vol. 15, no. 232 (M-1124)13. Juni 1991 & JP-A-30 72 010 (KUBOTA CORP) 27 März 1991

## Beschreibung

Die Erfindung betrifft ein Verfahren zum Aufheizen von keramischen Formteilen, bei welchem die Formteile induktiv auf die gewünschte Temperatur aufgeheizt werden.

In Patent Abstracts of Japan & JP-A-62282904 ist ein Verfahren bescchreiben, daß der Formgebung von Kohlenstoff enthaltenden feuerfesten Körpern bei erhöhten Temperaturen dient. Dabei wird der zu formende Körper, vor Einsatz in eine Form, einer Vorheizung durch eine Induktionsheizung unterzogen, um die Zeit der induktiven Erhitzung und Formgebung in der Form selbst zu verkürzen.

Aus der US-Patentschrift 3 435 992 ist eine Ausgußhülse für das kontinuierliche Gießen von flüssigem Metall oder gewöhnlichem Stahl bekannt, welche vor dem Inkontaktbringen mit dem flüssigen Metall induktiv aufgeheizt wird. Die in der US-Patentschrift 3 435 992 beschriebene Ausgußhülse weist einen elektrisch leitfähigen Einsatz in der aus einem im wesentlichen nicht elektrisch leitfähigen Feuerfestmaterial geformten Ausgußhülse auf. Durch eine Induktionsspule, welche die Ausgußhülse umgibt und im wesentlichen koaxial hierzu angeordnet ist, kann der elektrisch leitfähige Einsatz, der vorzugsweise aus einem Graphitteil besteht, durch einen Strom geeigneter Frequenz im Bereich zwischen 3 bis 50 kHz aufgeheizt werden, wobei jedoch zunächst nur der elektrisch leitfähige Einsatz Induktionsenergie aufnimmt und sich hierbei erhitzt, wobei die erzeugte Hitze durch Wärmeleitung auf die eigentliche, aus dem Feuerfestmaterial gebildete Ausgußhülse übertragen wird.

Eine solche Ausgußhülse zeigt jedoch lediglich die Verwendung eines getrennten, elektrisch leitfähigen Einsatzes mit unterschiedlicher Stärke und unterschiedlicher Länge im Verhältnis zur Ausgußhülse, so daß die Wärmeerzeugung sehr unterschiedlich ist. Hinzu kommt, daß im Feuerfestmaterial keine Erwärmung durch Induktion, sondern nur durch Wärmleitung von dem elektrisch leitfähigen Einsatz erfolgt. Bei schneller Aufheizung ist daher mit thermisch bedingten Rissen im feuerfesten Material zu rechnen.

Aufgabe der vorliegenden Erfindung ist ein Verfahren der zuvor beschriebenen Gattung, angewandt allgemein auf geformte keramische Materialien, bei welchem es vermieden wird, spezielle elektrisch leitfähige Einsätze zu verwenden, die eine andere chemische Zusammensetzung als das eigentliche Formteil besitzen, und bei welchem eine gleichmäßige Erwärmung in praktisch allen Teilen des geformten keramischen Materials erreicht wird.

Zur Lösung dieser Aufgabe dient das erfindungsgemäße Verfahren, welches dadurch gekennzeichnet ist, daß man ein Formteil verwendet, welches ein aus einem der organischen Bindemittel Kunstharz und/oder Pech und/oder Teer und/oder deren Derivate oder Modifikationen durch Verkoken bei 400 °C bis 1000 °C gebildete, homogen verteiltes Kohlenstoffgerüst besitzt.

Vorteilhafte Ausführungsformen des erfindungsgemäßen Verfahrens sind in den Patentansprüchen 2 bis 9 angegeben. Geformte keramische Materialien, d.h. Formteile, insbesondere Ausgußhülsen für metallurgische Gefäße und insbesondere Eintauchausgüsse, sowie Schieberplatten aus Feuerfestmaterial sind auf dem Fachgebiet wohlbekannte Feuerfestkörper. Bei ihrer Anwendung sind sie hohen thermischen und mechanischen Beanspruchungen ausgesetzt. So werden z.B. Ausgußhülsen oder Eintauchausgüsse, über die Schmelztemperatur des bei ihrer Anwendung durch sie hindurchströmenden Metalls erhitzt, und andererseits tritt durch die mit relativ hoher Geschwindigkeit durchströmende Metallschmelze eine starke Erosion der mit dem flüssigen Metall in Berührung kommenden Oberflächen auf. Weiterhin ist es erforderlich solche Ausgußhülsen vor der Inbetriebnahme auf eine ausreichend hohe Temperatur aufzuheizen, damit sie nicht infolge eines Thermoschocks reißen und damit beim Angießen das Metall nicht infolge einer Abkühlung an den nicht-aufgeheizten Oberflächen der Ausgußhülse erstarren und damit ein vollständiges Blockieren der Durchtrittsöffnung oder eine wesentliche Herabsetzung des Querschnittes der Durchflußöffnung der Ausgußhülse bewirken. Gemäß dem üblicherweise angewandten Stand der Technik wird daher z.B. ein Eintauchausguß vor seinem Einsatz mittels einer Gasflamme vorgeheizt. Ein solches Aufheizen dauert jedoch eine längere Zeitspanne, z.B. bis zu 30 Minuten und bei Gießstörungen noch länger, so daß mit einem Ausbrand von schützenden Glasuren gerechnet werden muß.

Überraschenderweise wurde nun gefunden, daß eine solche induktive gleichmäßige Aufheizung nicht nur bei Ausgußhülsen mit einem elektrisch leitenden Einsatz wie in der US-Patentschrift 3,435,992 möglich ist, wenn diese aus einem homogenen Feuerfestmaterial gebildet sind, sofern die Ausgußhülsen ein homogen verteiltes Kohlenstoffgerüst besitzen, wodurch eine induktive Ankopplung an eine in geeigneter Weise angebrachte Induktionsspule, die mit geeigneter Frequenz betrieben wird, möglich ist, sondern daß dies ganz allgemein auch für andere keramische Formteile, insbesondere Feuerfestformteile, gilt, sofern diese ein aus einem der organischen Bindemittel Kunstharz und/oder Pech und/oder Teer und/oder deren Derivate oder Modifikationen durch Verkoken bei 400 °C bis 1000 °C homogen verteiltes Kohlenstoffgerüst aufweisen.

Zur Ausbildung eines solchen Kohlenstoffgerüstes reicht es üblicherweise aus, wenn in der Ausgangsmischung nur 2 bis 15 Gew.-% und vorteilhafterweise nur 3 bis 10 Gew-% eines Bindemittels oder Zusatzstoffes enthalten waren, die bei Verkokung ein Kohlenstoffgerüst in dem Formteil liefern.

Die bei dem erfindungsgemäßen Verfahren verwendeten Induktoren sind an sich bekannt. Sie bestehen überlicherweise aus einem spulenförmig gewickelten Kupferrohr, das zur Kühlung innen von Wasser durchflossen ist, das üblicherweise mit Wechselstrom einer Frequenz von 0,1 bis 3000 kHz, vorteilhafterweise mit einer Frequenz zwischen 1 und 20 kHz, bevorzugt mit einer Frequenz zwischen 2 und 15 kHz beaufschlagt wird. Bei dünnen Wandstärken oder dünnen ankoppelnden Schichten oder porösem leitfähigem Material haben sich aber auch Frequenzen über 100 kHz bewährt.

Bei dem erfindungsgemäßen Verfahren können auf übliche Weise hergestellte Formteile eingesetzt werden, insbesondere Ausgußhülsen bzw. Eintauchausgüsse, welche als Feuerfestmaterialien üblicherweise Aluminiumoxid oder Siliziumdioxid oder Zirkoniumdioxid oder Magnesiumoxid oder gegebenenfalls auch eine Mischung von zwei oder mehreren dieser Feuerfestoxide enthalten, weiterhin üblicherweise bis zu 30 Gew.-% Graphit, insbesondere Flockengraphit, bezogen auf die Gesamtzusammensetzung aus Feuerfestoxiden und Graphit, enthalten.

Wenn solche Formteile, z.B. Eintauchausgüsse, unter Verwendung von Bindemitteln hergestellt wurden, welche bei Erhitzung auf Temperaturen zwischen 400 und 1000°C und besonders bevorzugt zwischen 750°C und 850°C, ein Kohlenstoffgerüst bilden, erfolgt eine ausreichend gute induktive Ankopplung unter ausreichend schnellem Aufheizen bei Betrieb der Induktionsspule. Diese muß selbstverständlich so ausgelegt sein, daß sie eine ausreichende Leistung abgibt.

Besonders gute induktive Ankopplung wird dann erhalten, wenn ein Formteil verwendet wird, bei dessen Herstellung eine Graphit enthaltende Ausgangsmischung verwendet wurde, wobei selbstverständlich das zuvorgenannte Kohlenstoffgerüst in dem Formteil ausgebildet sein muß. Versuche haben gezeigt, daß eine induktive Ankopplung nicht möglich ist, sofern die Formteile nur Graphit, z.B. bis zu 40 Gew.-%, enthalten, jedoch kein Kohlenstoffgerüst aufweisen.

Das Kohlenstoffgerüst in den erfindungsgemäß verwendeten Formteilen wird durch Verkoken von Kunstharzen, Teer oder Pech oder einer Mischung hiervon gebildet, d.h. eines bei der Herstellung von Formteilen einsetzbaren Bindemittels. Das Kohlenstoffgerüst kann auch durch Verkoken von Derivaten oder Modifikationen von Kunstharzen, Teer und/oder Pech gebildet werden. Bei Verwendung von Phenolharz als Bindemittel wird üblicherweise noch ein Aushärtkatalysator eingesetzt, z.B. Hexamethylentetramin.

Als besonders vorteilhaft hat es sich herausgestellt, wenn das Kohlenstoffgerüst durch Verkoken eines Bindemittels hergestellt wurde, das aus einem Novolak, unter Verwendung von Hexamethylentetramin als Aushärtungsmittel hergestellt wurde. Besonders gute Ergebnisse wurden erzielt, wenn neben dem Novolak und dem Hexamethylentetramin noch Furfurylaldehyd in dem Bindemittelgemisch verwendet wurde.

Solche Formteile werden durch Vermischen der Feuerfestausgangsmaterialien, gegebenenfalls des Graphits und des Bindemittels, welches zur Ausbildung eines Kohlenstoffgerüstes in der Lage ist, hergestellt, das Bindemittel wird gegebenenfalls bei Temperaturen zwischen 120°C und 200°C ausgehärtet, gegebenenfalls unter Voranschaltung eines Trocknungsvorganges, falls bei der Herstellung der Ausgangsmischung für die Formteile Wasser in wesentlichen Mengen vorhanden war, anschließend werden die Formteile bei geeigneten Temperaturen für eine Verkokung getempert, bei Temperaturen zwischen 400°C und 1000°C, bevorzugt zwischen 750°C und 1000°C.

Bei der Herstellung von Formteilen und insbesondere Eintauchausgüssen werden üblicherweise 2 bis 6 Gew.-Teile Harz, insbesondere Phenolharze wie Novolake, bezogen auf 100 Gew.-Teile der übrigen Feststoffe, eingesetzt, wobei Phenolharze bis zu 10 Gew.-% eines Härters wie Hexamethylentetramin enthalten können, sofern sie in fester Form als Pulver eingesetzt werden, wie dies dem Stand der Technik entspricht. Die maximale Korngröße der verwendeten Feuerfestoxide beträgt üblicherweise 1 mm.

Im folgenden wird die Herstellung eines Eintauchausgusses beispielhaft beschrieben:

75 Gew.-Teile Al₂O₃ mit einer maximalen Korngröße von 1 mm 20 Gew.-Teile SiO₂ mit einer maximalen Korngröße von 0,5 mm und 15 Gew.-Teile Flockengraphit mit einer maximalen Korngröße von 0,3 mm wurden zusammen mit 4 Gew.-Teilen einer Pulvermischung aus 90 % Novolakharz und 10% Hexamethylentetramin und Zugabe von 2 Gew.-Teilen Furfural in einem Mischer granuliert und hieraus in einer Presse Eintauchausgüsse mit den Abmessungen: Länge = 800 mm, Innendurchmesser = 40 mm und Außendurchmesser = 125 mm geformt. Nach Trocknen und Aushärten bei 180°C wurden die Formkörper bei 800°C während 5 h in reduzierender Atmosphäre wärmebehandelt bzw. getempert, wobei das ausgehärtete Harz verkokte.

Dieser Eintauchausguß konnte ohne Schwierigkeit in einer geeignet dimensionierten und ausreichend leistungsfähigen Induktionsspule aufgeheizt werden. Im vorliegenden Fall wurde ein Teil dieses Eintauchausgusses mit einer Länge von 300 mm innerhalb von 3 bis 4 Minuten auf Weißglut aufgeheizt, die Leistungsaufnahme entsprach hierbei 30 kW, gemessen als Leistungsaufnahme der Induktionsspule. Die Frequenz betrug 10 kHz.

Das erfindungsgemäße Verfahren ist besonders zum Aufheizen von Hülsen, Ausgußhülsen, Eintauchausgüssen oder Schattenrohren vor einem Inkontaktbringen mit flüssigem Metall geeignet.

Weiterhin hat es sich herausgestellt, daß das erfindungsgemäße Aufheizverfahren auch zum Brennen von Formteilen, insbesondere Feuerfestformteilen angewandt werden kann, welche beim Gießen von Metallen verwendet werden, z.B. für die keramischen Einsätze von sogenannten Schieberplatten, oder auch für eine beliebige thermische Behandlung von Formteilen.

Sowohl für das Brennen eines Formteils als auch insbesondere für das Aufheizen "in time" im Stahlwerk ist das erfindungsgemäße Verfahren besonders vorteilhaft, wenn ein Feuerfestmaterial zum Einsatz kommt, das eine günstige Permeabilität aufweist, so daß sich ein nennenswerter Leistungsumsatz erzielen läßt. So kann ein rohrförmiges Feuerfestteil mit einer Leistungsaufnahme von etwa 10 kW/dm³ in etwa 2 bis 5 Min. auf Rotglut aufgeheizt werden. Bei der Herstellung von gebrannten Formteilen, z.B. solchen Schieberplatten, kann es vorteilhaft sein, das Aufheizen des Formteils nicht von Umgebungstemperatur an bis zur Brenntemperatur durchzuführen, sondern nach der Bildung eines Kohlenstoffgerüstes aus einem geeigneten organischen Bindemittel durch Verkoken bei Temperaturen von z.B. 550°C bis 800°C kann das sich noch auf Bildungstemperatur oder geringfügig unter Bildungstemperatur des Kohlenstoffgerüstes befindliche Formteil direkt in eine geeignet dimensionierte Induktionsspule eingesetzt werden und bis zur Brenntemperatur des Formteils aufgeheizt werden, beispielsweise von einer Bildungstemperatur des Kohlenstoffgerüstes von 750°C bis auf eine Brenntemperatur von 1400°C.

Diese Verfahrensweise der direkt an die Bildung des Kohlenstoffgerüstes in dem Formteil anschließenden weiteren Aufheizung in einem Induktor kann auch für beliebige andere thermische Behandlungen des Formteiles angewandt werden.

Gemäß einer weiteren Abwandlung kann das erfindungsgemäße Verfahren auch dazu verwendet werden, ein grünes Formteil, d.h. ein Formteil, welches noch nicht verkoktes Bindemittel enthält, aufzuheizen. Um das Kohlenstoffgerüst aus dem in dem grünen Formteil enthaltenen Bindemittel zu bilden, erfolgt zunächst eine induktive Aufheizung des grünen Formteils unter Verwendung eines bei Raumtemperatur induktiv angekoppelnden, das Formteil umgebenden Mantels, der üblicherweise aus Metall, z.B. Eisen, oder aus Kohlenstoffasern bestehen kann. Der Mantel kann als die induktive Ankopplung ermöglichendes Material aber auch Molybdändisilicid oder rekristallisiertes SiC umfassen. Ein solcher Mantel kann induktiv aufgeheizt werden und gibt dann durch Konvektion und/oder Strahlung seine Wärme an die gegenüberliegende Oberfläche des grünen Formteils ab, so daß zumindest in diesem Oberflächenbereich, d.h. Randbereich des Formteils das Bindemittel zu einem Kohlenstoffgerüst mit für das Ankoppeln hinreichender Stärke in mindestens Millimetergröße verkokt werden kann. Sobald ein für die Ankopplung ausreichendes Kohlenstoffgerüst gebildet ist, kann der Mantel entfernt werden und das Formteil wird, weiter induktiv aufgeheizt, so daß eine vollständige Aufheizung des Formteils bis zur gewünschten Temperatur durchgeführt werden kann.

Vorteilhafterweise wird diese Abwandlung des erfindungsgemäßen Verfahrens in ein und demselben Induktor durchgeführt, wozu der Mantel nach geeigneter Aufheizung nur aus dem Induktor entfernt werden muß und dann die weitere Aufheizung des Formteils erfolgt. Besteht der Mantel aus einer auf das Formteil mit hinreichender Dicke aufgebrachte Schicht aus Graphit oder Kohlenstoff, so kann er einfach abgebrannt werden.

## Patentansprüche

1. Verfahren zum Aufheizen von keramischen Formteilen, wobei die Formteile induktiv auf die gewünschte Temperatur aufgeheizt werden,
dadurch gekennzeichnet,
daß man ein Formteil verwendet, welches ein aus einem der organischen Bindemittel Kunstharz und/oder Pech und/oder Teer und/oder deren Derivate oder Modifikationen durch Verkoken bei 400°C bis 1000°C gebildetes homogen verteiltes Kohlenstoffgerüst besitzt.

2. Verfahren nach Anspruch 1,
dadurch gekennzeichnet,
daß man ein Formteil verwendet, welches ein durch Verkoken von Phenolharz/en gebildetes Kohlenstoffgerüst besitzt.

3. Verfahren nach Anspruch 1,
dadurch gekennzeichnet,
daß man ein Formteil verwendet, welches als keramisches Material Aluminiumoxid und/oder Magnesiumoxid und/oder Siliziumdioxid und/oder Zirkoniumdioxid umfaßt.

4. Verfahren nach Anspruch 1,
dadurch gekennzeichnet,
daß man ein Formte verwendet, welches aus 5 bis 90 Gew.-%, vorzugsweise 5 bis 40 Gew.-%, Graphit und/oder feinteiligen Kohlenstoff enthaltender Ausgangsmischung hergestellt worden ist.

5. Verfahren nach Anspruch 1,
dadurch gekennzeichnet,
daß man ein Formteil verwendet, welches einen Leistungsumsatz von 5 kW bis 15 kW pro dm³ des Formteils, vorzugsweise 10 kW pro dm³ des Formteils, aufweist.

6. Verfahren nach Anspruch 5,
dadurch gekennzeichnet,
daß man das induktive Aufheizen mit einer Frequenz von 2 bis 15 kHz oder einer Frequenz größer als 100 kHz durchführt.

7. Verfahren nach Anspruch 1,
dadurch gekennzeichnet,
daß man es auf das Aufheizen von Stopfen, Hülsen, Ausgüssen, Eintauchausgüssen oder Schattenrohren unmittelbar, das ist vor Ort im Stahlwerk vor dem Inkontaktbringen oder während des Kontakts mit flüssigem Metall anwendet.

8. Verfahren nach Anspruch 1,
dadurch gekennzeichnet,
daß man es zum Brennen der Formteile verwendet.

9. Verfahren nach Anspruch 8,
dadurch gekennzeichnet,
daß man es zum Brennen von mit flüssigem Stahl in Kontakt kommenden Verschleißteilen, wie Stopfen, Hülsen, Eintauchausgüssen oder Schieberplatten anwendet.

10. Verfahren nach Anspruch 1,
dadurch gekennzeichnet,
daß man das Aufheizen des Formteils im Anschluß an die Bildung des Kohlenstoffgerüsts von der Bildungstemperatur des Kohlenstoffgerüsts bis zu einer höheren Temperatur, insbesondere Brenntemperatur, induktiv durchführt.

11. Verfahren nach Anspruch 1,
dadurch gekennzeichnet,
daß man die Aufheizung des grünen Formteils bis zur Bildung des Kohlenstoffgerüsts durch induktive Aufheizung eines bei Raumtemperatur induktiv ankoppelnden, das Formteil umgebenden Mantels durchführt, der mittels Konvektion und/oder Strahlung zumindest in einem Randbereich des Formteils das Bindemittel zu einem Kohlenstoffgerüst soweit verkokt,, daß nach Entfernung des Mantels das Formteil induktiv ankoppelt und vollständig bis zur gewünschten Temperatur aufgeheizt wird.

12. Verfahren nach Anspruch 11,
dadurch gekennzeichnet,
daß der Mantel und das Formteil aufeinander folgend im selben Induktor induktiv aufgeheizt werden.

13. Verfahren nach Anspruch 11,
dadurch gekennzeichnet,
daß der Mantel metallisch ist oder aus Kohlenstoffasern aufgebaut ist oder Molybdändisilizid oder rekristallisiertes Siliziumcarbid umfaßt.

14. Verfahren nach Anspruch 11,
dadurch gekennzeichnet,
daß der Mantel eine auf das Formteil aufgebrannte Schlichte auf Graphit- und/oder Kohlenstoffbasis ist, die in oxidierender Atmosphäre abbrennbar ist.

## Claims

1. Method of heating ceramic shaped components, the shaped components being heated inductively to the desired temperature, characterised in that a shaped component is used which has a homogeneously distributed carbon structure formed from one of the organic bonding agents synthetic resin and/or pitch and/or tar and/or derivatives or modifications thereof by carbonisation at 400°C to 1000°C.

2. Method as claimed in claim 1, characterised in that a shaped component is used which has a carbon structure formed by carbonisation of phenol resin(s).

3. Method as claimed in claim 1, characterised in that a shaped component is used which includes aluminium oxide and/or magnesium oxide and/or silicon dioxide and/or zirconium dioxide as the ceramic material.

4. Method as claimed in claim 1, characterised in that a shaped component is used which has been produced from a starting mixture containing 5 to 90 wt.%, preferably 5 to 40 wt.% graphite and/or finely divided carbon.

5. Method as claimed in claim 1, characterised in that a shaped component is used which has an energy conversion of 5kW to 15kW per dm³ of the shaped component, preferably 10kW per dm³ of the shaped component.

6. Method as claimed in claim 5, characterised in that the inductive heating is performed with a frequency of 2 to 15kHz or a frequency greater than 100kHz.

7. Method as claimed in claim 1, characterised in that it is used for the heating of stoppers, sleeves, nozzles, immersion nozzles or shadow tubes directly, that is to say in situ in a steel works before bringing them into contact or during the contact with molten metal.

8. Method as claimed in claim 1, characterised in that it is used for firing the shaped components.

9. Method as claimed in claim 8, characterised in that it is used for firing wear components, such as stoppers, sleeves, immersion nozzles or sliding plates, which come into contact with molten steel.

10. Method as claimed in claim 1, characterised in that the heating of the shaped component is performed inductively following on from the formation of the carbon structure from the formation temperature of the carbon structure up to a higher temperature, particularly the firing temperature.

11. Method as claimed in claim 1, characterised in that the heating of the green shaped component is performed up to the formation of the carbon structure by inductive heating of a shell, which surrounds the shaped member and inductively couples at room temperature and which carbonises the bonding agent into a carbon structure by means of convection and/or radiation, at least in an edge region of the shaped component, to the extent that after removal of the shell the shaped component inductively couples and is heated completely to the desired temperature.

12. Method as claimed in claim 11, characterised in that the shell and the shaped component are inductive heated successively in the same inductor.

13. Method as claimed in claim 11, characterised in that the shell is constructed of metal or of carbon fibres or includes molybdenum disilicide or recrystallised silicon carbide.

14. Method as claimed in claim 11, characterised in that the shell is a facing based on graphite and/or carbon which is burnt onto the shaped component and which may be burnt off in an oxidising atmosphere.

## Revendications

1. Procédé de chauffage de pièces moulées céramiques, les pièces moulées étant chauffées par induction à la température désirée, caractérisé en ce que l'on utilise une pièce moulée possédant un squelette carboné réparti uniformément et formé par cokéfaction, à une température comprise entre 400 et 1000 °C, d'un liant organique tel qu'une résine synthétique et/ou de la poix et/ou du goudron et/ou des dérivés ou variantes de ceux-ci.

2. Procédé conforme à la revendication 1, caractérisé en ce que l'on utilise une pièce moulée possédant un squelette carboné formé par cokéfaction d'une ou de plusieurs résine(s) phénolique(s).

3. Procédé conforme à la revendication 1, caractérisé en ce que l'on utilise une pièce moulée comprenant, comme matériau céramique, de l'oxyde d'aluminium et/ou de l'oxyde de magnésium et/ou du dioxyde de silicium et/ou du dioxyde de zirconium.

4. Procédé conforme à la revendication 1, caractérisé en ce que l'on utilise une pièce moulée qui a été préparée à partir d'un mélange de départ contenant de 5 à 90 % en poids, de préférence de 5 à 40 % en poids, de graphite et/ou de carbone finement divisé.

5. Procédé conforme à la revendication 1, caractérisé en ce que l'on utilise une pièce moulée présentant une puissance absorbée de 5 kW à 15 kW par dm³ de pièce moulée, de préférence de 10 kW par dm³ de pièce moulée.

6. Procédé conforme à la revendication 5, caractérisé en ce que le chauffage par induction se fait à une fréquence comprise entre 2 et 15 kHz ou à une fréquence supérieure à 100 kHz.

7. Procédé conforme à la revendication 1, caractérisé en ce qu'il est utilise pour le chauffage direct de bouchons, de manchons, de busettes, de busettes immergées ou de tuyaux de protection du jet contre l'oxydation par l'air, c'est-à-dire pour le chauffage *in situ* dans l'aciérie avant ou pendant la mise en contact avec le métal en fusion.

8. Procédé conforme à la revendication 1, caractérisé en ce qu'il est utilisé pour la cuisson des pièces moulées.

9. Procédé conforme à la revendication 8, caractérisé en ce qu'il est utilisé pour la cuisson de pièces d'usure venant au contact de l'acier liquide, telles que des bouchons, des manchons, des busettes immergées ou des plaques pour obturateurs coulissants.

10. Procédé conforme à la revendication 1, caractérisé en ce que le chauffage de la pièce moulée à partir de la température de la formation du squelette carboné, après formation de celui-ci, jusqu'à une température plus élevée, en particulier jusqu'à la température de cuisson, est un chauffage par induction.

11. Procédé conforme à la revendication 1, caractérisé en ce que l'on réalise le chauffage de la pièce moulée verte, jusqu'à la formation du squelette carboné, par chauffage inductif d'une enveloppe entourant la pièce moulée et permettant un couplage inductif, laquelle enveloppe permet, par convection et/ou rayonnement, la cokéfaction du liant en squelette carboné au moins au niveau d'une zone périphérique de la pièce moulée, de sorte que, après enlèvement de l'enveloppe, la pièce moulée permette un couplage inductif et puisse être chauffée jusqu'à la température désirée.

12. Procédé conforme à la revendication 11, caractérisé en ce que l'enveloppe et la pièce moulée sont chauffées l'une après l'autre par induction dans la même bobine d'inductance.

13. Procédé conforme à la revendication 11, caractérisé en ce que l'enveloppe est une enveloppe métallique ou est constituée de fibres de carbone ou comprend du disiliciure de molybdène ou du carbure de silicium recristallisé.

14. Procédé conforme à la revendication 11, caractérisé en ce que l'enveloppe est un enduit à base de graphite et/ou de carbone appliqué par cuisson sur la pièce moulée et pouvant être éliminé de celle-ci par combustion dans une atmosphère oxydante.
